# EUROPÄISCHE PATENTSCHRIFT

(11) **EP 2 103 861 B1**
(45) Veröffentlichungstag und Bekanntmachung des Hinweises auf die Patenterteilung: **25.04.2012**
(21) Anmeldenummer: 09151511.4
(22) Anmeldetag: 28.01.2009
(51) Int. Cl.: F16M 11/04, A61G 13/00

(54) **Stativ zur Halterung und Positionierung einer Nutzlast im Raum**
Support for holding and positioning a payload in a room
Support destiné à tenir et à positioner une charge utile dans une pièce

(30) Priorität: 20.03.2008 DE 102008015210
(43) Veröffentlichungstag der Anmeldung: 23.09.2009
(73) Patentinhaber: MAQUET GmbH & Co. KG, 76437 Rastatt (DE)
(72) Erfinder: Koch, Guido, 76135 Karlsruhe (DE); Pfeuffer, Reinhard, 76477 Elchesheim-Illingen (DE)
(74) Vertreter: Schaumburg, Thoenes, Thurn, Landskron, Eckert

(56) Entgegenhaltungen:
- BE-A- 385 845
- BE-A- 449 251
- DE-A1- 4 403 415
- FR-A1- 2 505 978
- GB-A- 698 984
- US-A- 5 192 963
- US-B2- 6 705 773

## Beschreibung

Die Erfindung betrifft ein Stativ zur Halterung und Positionierung einer Nutzlast im Raum gemäß dem Oberbegriff des Anspruchs 1.

Ein solches Stativ ist aus der BE 385 845 A bekannt. Ähnliche Stative mit der gleichen Art des Gewichtsausgleiches zeigen die BE 449 251 A und die FR 2 505 978 A1.

Stative der vorstehend genannten Art haben den Vorzug, dass über das Gegengewicht die Nutzlast exakt kompensiert werden kann, so dass es möglich ist, die Nutzlast kräftefrei im Raum zu bewegen und zu positionieren. Aufgrund der gewählten Längen der Lenker und der beschriebenen Kopplung der Lenker verläuft eine gedachte Verbindungslinie zwischen dem Angriffspunkt der Nutzlast an dem ersten Lenker und dem Schwerpunkt des Gewichtes an dem zweiten Lenker stets durch die vertikale erste Achse unabhängig von der jeweiligen Schwenkstellung der Lenker. Mit dieser Anordnung kann bei horizontalem Tragarm jeder Punkt auf einer Kreisfläche mit dem Radius der doppelten Länge des ersten Lenkers von der Nutzlast erreicht werden. Gleichzeitig kann durch ein Verschwenken des Tragarmes die Nutzlast in ihrer Höhe verstellt werden, so dass die Nutzlast in einem zylinderförmigen (oder genauer: tonnenförmigen) Raum beliebig verstellt werden kann. Damit ist es möglich, eine Nutzlastpositionierung im Raum zu erreichen bei vollständigem Massenausgleich durch das Gegengewicht, wobei die Lasteinleitung in die Basis momentenfrei bleibt. Dies wiederum hat zur Folge, dass die Tragestruktur leichter ausgeführt werden kann.

Häufig handelt es sich bei der Nutzlast um ein Gerät, das unabhängig von der Schwenkstellung des Tragarmes und/oder des ersten Lenkers seine Ausrichtung bezüglich der Vertikalen beibehalten soll. Aus der US 6,705,773 B2 ist ein Kamerastativ bekannt, das bei ähnlichem Aufbau wie die eingangs genannten Stative die Positionierung der Kamera an beliebigen Stellen eines Raumvolumens mit teilweisem Gewichtsausgleich ermöglicht und andererseits gewährleistet, dass die Kamera ihrer Orientierung im Raum beibehält. Hierzu hat das Stativ ein komplexes Gestänge aus miteinander gekoppelten Parallelogrammgelenken.

Der Erfindung liegt die Aufgabe zugrunde, ein Stativ der eingangs genannten Art anzugeben, das eine selbsttätige Verstellung des mit einer Nutzlast koppelbaren Tragkopfes in Anpassung an ein Verschwenken des Tragarmes gewährleistet.

Diese Aufgabe wird erfindungsgemäß durch die im kennzeichnenden Teil des Anspruchs 1 angegebenen Merkmale gelöst. Demgemäß ist der Tragkopf drehfest mit einer zur Schwenkachse koaxialen Welle verbunden, die mit einem ersten Schenkel eines innerhalb des Tragarmes angeordneten ersten Viergelenkes gelenkig verbunden ist, dessen zum ersten Schenkel paralleler zweiter Schenkel vertikal gerichtet und starr mit dem den Tragarm aufnehmenden Lagerteil verbunden ist, wobei eine durch den zweiten Schenkel verlaufende Gelenkachse mit der horizontalen zweiten Achse zusammenfällt und wobei der erste und der zweite Schenkel durch einen parallel zur Längsrichtung des Tragarmes gerichteten ersten Parallellenker verbunden sind. Über dieses erste Viergelenk wird gewährleistet, dass die Nutzlast an dem ersten Lenker unabhängig von der Schwenkstellung des Tragarmes beispielsweise stets eine vertikale Lage beibehält. Dies gilt allerdings nur für den Fall, dass der erste Lenker mit seiner Längsrichtung senkrecht zur Längsrichtung des Tragarmes gerichtet ist. Ist der Winkel zwischen dem ersten Lenker und dem Tragarm von 90° verschieden, muss auch eine Möglichkeit bestehen, die Nutzlast um eine horizontale Achse zu verschwenken, um beispielsweise die vertikale Ausrichtung beizubehalten. Hierzu umfasst der Tragkopf ein mit dem ersten Lenker verbundenes Kopfteil und ein mit der Nutzlast verbindbares Halteteil, das an dem Kopfteil um eine zur Längsrichtung des ersten Lenkers senkrechte Gelenkachse schwenkbar ist, wobei das Halteteil mit dem ersten Schenkel des ersten Viergelenkes über einen zur Längsrichtung des ersten Lenkers parallelen zweiten Parallellenker unter Bildung eines zweiten Viergelenkes verbunden ist, dessen Gelenkachsen parallel zur Gelenkachse des Halteteils sind. Damit kann die Ausrichtung der Nutzlast unabhängig von der Schwenkstellung des Tragarmes und der jeweiligen Schwenkstellung des ersten Lenkers relativ zum Tragarm automatisch beibehalten werden.

Die oben genannte Kopplung der beiden Lenker kann auf unterschiedliche Weise erfolgen. So können die Kopplungsmittel einen parallel zur Längsrichtung des Tragarmes gerichteten Parallellenker umfassen, der an seinen Enden gelenkig mit den beiden Lenkern unter Bildung eines Gelenkviereckes verbunden ist. Eine andere Möglichkeit besteht darin, dass die Kopplungsmittel ein endloses Zugglied umfassen, das über jeweils drehfest mit den beiden Lenkern verbundene Scheiben geführt ist. Zweckmäßigerweise ist das Zugglied in diesen Fällen von einem Zahnriemen oder einer Kette gebildet, die über entsprechende Zahnscheiben oder Kettenräder läuft.

Das Gegengewicht ist zweckmäßigerweise lösbar an dem zweiten Lenker angeordnet, so dass es beim Anbringen verschiedener Nutzlasten an dem ersten Lenker ausgewechselt werden kann. Alternativ oder auch zusätzlich hierzu kann das Gewicht an dem zweiten Lenker in Längsrichtung desselben einstellbar sein, um eine Feinjustierung des Gewichtsausgleichs zu ermöglichen.

Die Basis, der Tragarm sowie der erste und der zweite Lenker des erfindungsgemäßen Statives können zur Aufnahme und Führung von Versorgungsleitungen für die jeweilige Nutzlast ausgebildet sein.

Weitere Vorteile und Merkmale der Erfindung ergeben sich aus der folgenden Beschreibung, welche in Verbindung mit den beigefügten Zeichnungen die Erfindung anhand eines Ausführungsbeispieles erläutert. Es zeigen:
- Fig. 1: eine teilweise schematische perspektivische Darstellung eines erfindungsgemäßen Deckenstatives,
- Fig. 2 und 3: jeweils eine Draufsicht auf das Deckenstativ gemäß Figur 1 in unterschiedlichen Schwenkstellungen der beiden Lenker,

- Fig. 4: eine teilweise geschnittene perspektivische Seitenansicht des Stativs nach Figur 1,
- Fig. 5: eine vergrößerte Darstellung eines Details aus Figur 4, wel- ches die Lagerung des Tragarmes an der Basis zeigt,
- Fig. 6: eine vergrößerte Detaildarstellung des Gelenkbereiches zwischen dem Tragarm und dem die Nutzlast tragenden Lenker und
- Fig. 7: eine vergrößerte Detaildarstellung des Tragkopfes, über den die Nutzlast an dem ersten Lenker aufgehängt ist.

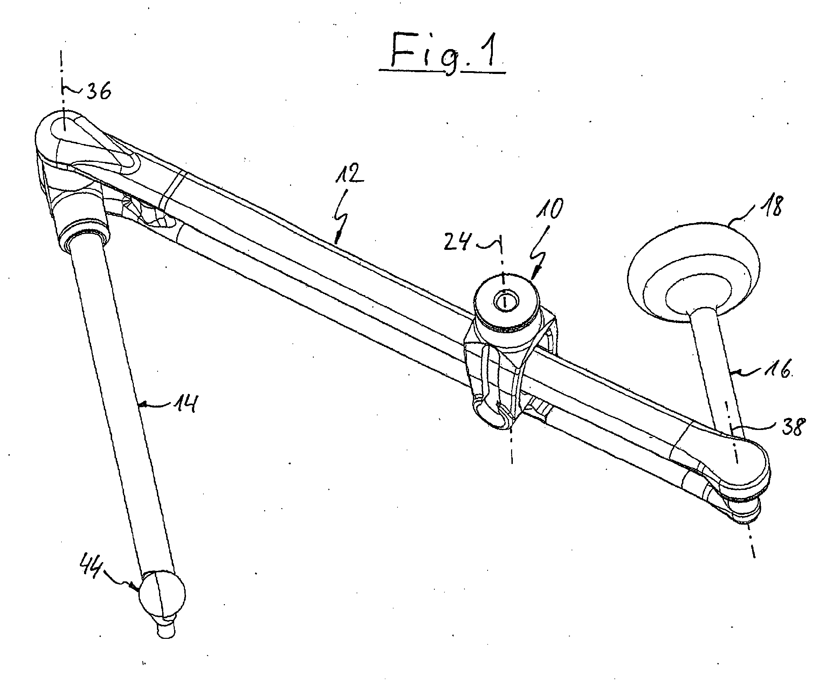

Das in der Figur 1 teilweise schematisch dargestellte Deckenstativ umfasst eine Basis 10 und einen langgestreckten Tragarm 12, an dessen beiden Enden ein erster Lenker 14 zur Halterung einer nicht dargestellten Nutzlast und ein zweiter Lenker 16 angelenkt sind, der ein Gegengewicht 18 trägt. Das Gegengewicht kann in nicht dargestellter Weise in Längsrichtung des zweiten Lenkers 16 verstellbar sein.

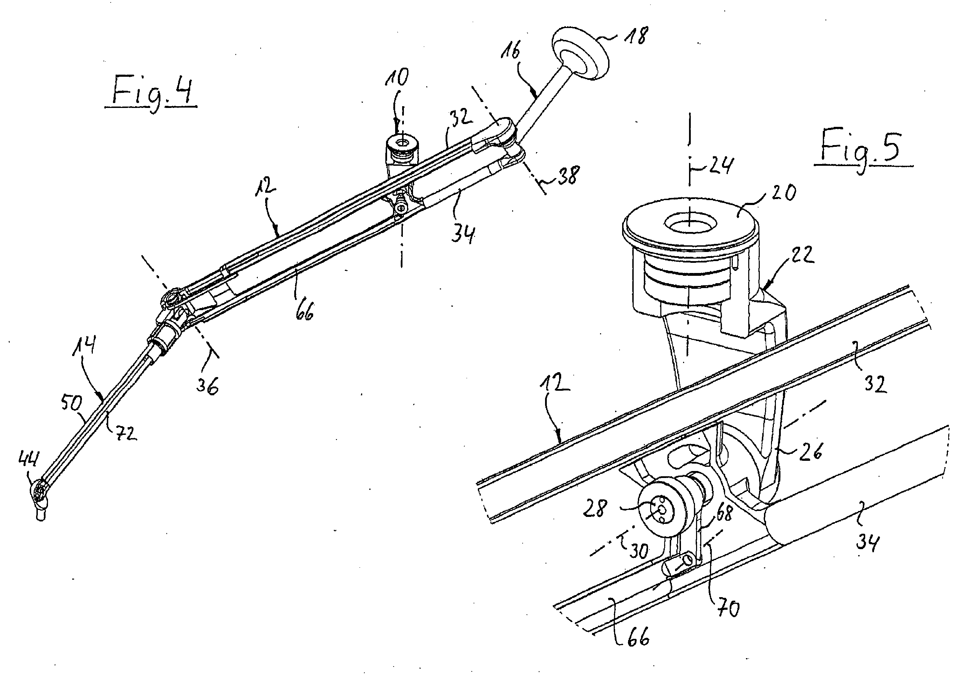

Die Basis umfasst ein an einer Raumdecke befestigbares Sockelteil 20 (Fig. 5) an dem ein gabelförmiges Lagerteil 22 um eine erste vertikale Achse 24 drehbar gelagert ist. Zwischen den Gabelschenkeln 26 des Lagerteiles 22 ist der Tragarm 12 auf einem Wellenzapfen 28 um eine horizontale zweite Achse 30 schwenkbar gelagert (Fig. 5).

Der Tragarm 12 besteht aus einem oberen Holm 32 und einem unteren Holm 34 zwischen denen der erste Lenker 14 um eine dritte Achse 36 und der zweite Lenker 16 um eine vierte Achse 38 schwenkbar gelagert sind. Die Achsen 36 und 38 liegen in einer Ebene mit der ersten Achse 24.

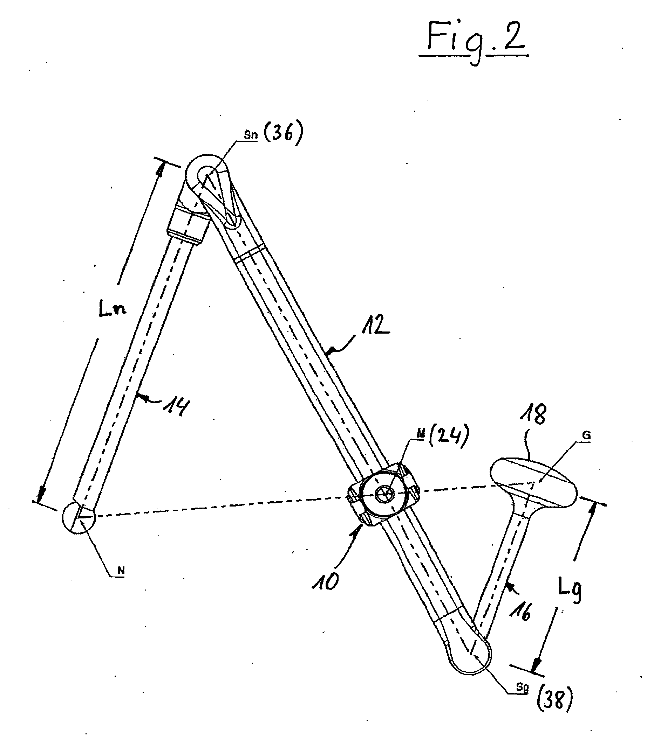

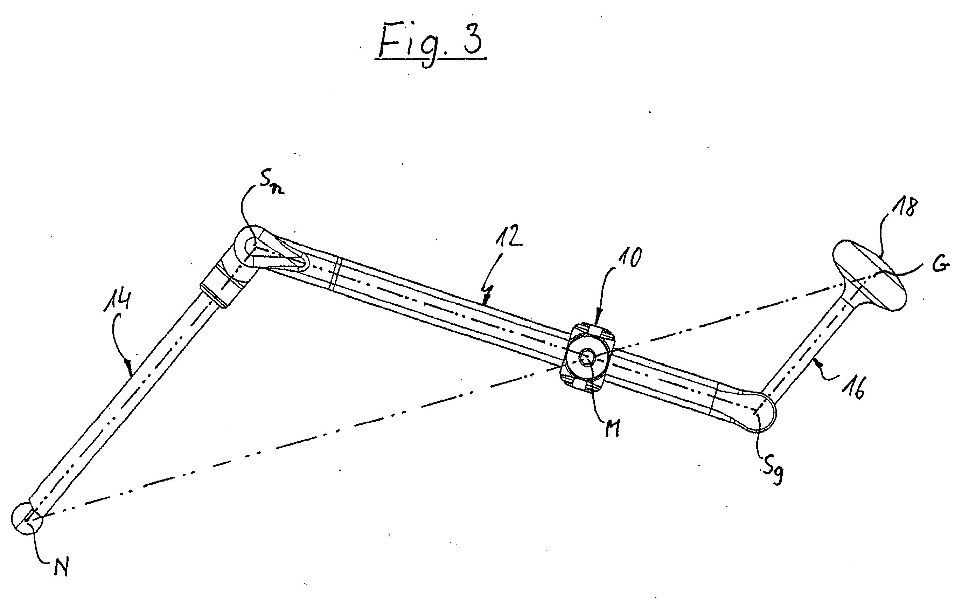

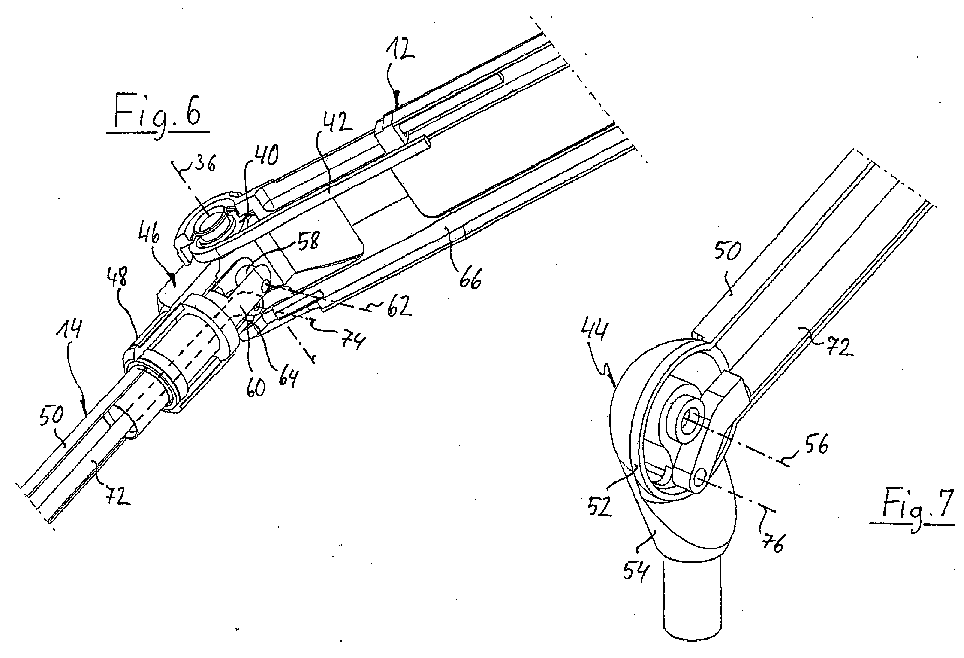

Der erste Lenker 14 und der zweite Lenker 16 sind in ihren Gelenken, in denen sie mit dem Tragarm 12 verbunden sind, jeweils drehfest mit einer Zahnscheibe 40 verbunden, die nur für das Gelenk zwischen dem ersten Lenker 14 und dem Tragarm 12 in Figur 6 dargestellt ist. Über diese Zahnscheiben verläuft ein Zahnriemen 42, der die beiden Zahnscheiben 40 des ersten Lenkers 14 und des zweiten Lenkers 16 so miteinander koppelt, dass die beiden Lenker 14 und 16 stets ihre in den Figuren 1 bis 3 dargestellte antiparallele Stellung beibehalten, unabhängig von ihrem Schwenkwinkel relativ zum Tragarm 12. Dies ist aus einem Vergleich der Figuren 2 und 3 eindeutig zu erkennen.

In der Figur 2 ist mit M die Lage der ersten Achse 24 bezeichnet. Die Lage der dritten Achse 36 und der vierten Achse 38 sind mit Sn bzw. Sg bezeichnet. Mit N ist der Angriffspunkt der Nutzlast an einem mit dem ersten Lenker 14 verbundenen Tragkopf 44 bezeichnet. Mit G ist der Schwerpunkt des Gegengewichtes oder Ausgleichsgewichtes 18 gekennzeichnet. Die Abmessungen sind so gewählt, dass die mit Ln bezeichnete Strecke zwischen den Punkten Sn und N gleich der Strecke zwischen den Punkten Sn und M ist. In gleicher Weise ist die mit Lg bezeichnete Strecke zwischen den Punkten Sg und G gleich dem Abstand zwischen Sg und M. Die Größe des Gewichtes 18 ist im Verhältnis Ln zu Lg zur Nutzlast zu wählen.

Aufgrund der Kopplung der beiden Lenker 14 und 16 kann man sich über den Punkten M, Sn, N sowie über den Punkten M, Sg, G Dreiecke aufgespannt denken, die durch strichpunktierte Linien in Figur 2 gekennzeichnet sind und die beide gleichschenklig und einander geometrisch ähnlich sind. Die Verbindungslinie N-G geht aufgrund der Gleichschenkligkeit der Dreiecke durch den Punkt M. Der Verhältnis der Abstände N-M zu G-M ist aufgrund der geometrischen Ähnlichkeit gleich dem Verhältnis Ln zu Lg. Da dies für jeden Winkel zwischen dem ersten Lenker 14 und dem Tragarm 12 gilt, ist die Nutzlast in jeder Stellung der Lenker 14, 16 bezüglich der Drehachse 24 (Punkt M) ausgeglichen. Durch verkleinern oder vergrößern des Winkels zwischen den Lenkers 14, 16 und dem Tragarm 12 kann die Nutzlast innerhalb einer Kreisfläche mit dem Radius 2 Ln jeden Punkt erreichen. Eine Drehung des Tragarmes 12 um die erste Achse 24 erschließt die waagerechte Kreisfläche, ein Schwenken des Tragarmes 12 um die zweite Achse 30 erlaubt eine Variierung der Höhe der Nutzlast, wobei die Gleichgewichtsverhältnisse zwischen Nutzlast und Gegengewicht 18 von der Bewegung der Nutzlast unberührt bleiben. Damit ist es möglich, eine Nutzlastpositionierung im Raum zu erreichen bei vollständigem Massenausgleich durch das Gegengewicht. Die Lasteinleitung in die Deckenstruktur über die Basis 10 bleibt dabei momentenfrei.

Die Nutzlast kann von einem beliebigen Gerät gebildet sein, beispielsweise einer Operationsleuchte oder einer Monitoranordnung. Während die Operationsleuchte meist einen Gelenkarm umfasst, an dem der Leuchtenkörper um drei wechselseitig senkrecht aufeinander stehende Achsen kardanisch gelagert ist und somit in jede Lage gebracht werden kann, möchte man bei einer Monitoranordnung in der Regel sicherstellen, dass der Monitor seine Stellung im Raum beibehält, unabhängig von dem Schwenkwinkel des Tragarmes oder des den Monitor tragenden ersten Lenkers 14. Die Beibehaltung der Ausrichtung der Nutzlast im Raum unabhängig von der Schwenkstellung des Tragarmes 12 oder des ersten Lenkers 14 wird durch zwei Viergelenke sichergestellt, die im weiteren erläutert werden sollen.

Hierzu wird zunächst auf die Figuren 4 und 6 Bezug genommen. Der erste Lenker 14 besteht im wesentlichen aus einem in dem Tragarm 12 schwenkbar gelagerten Gelenkteil 46 mit einer Muffe 48, und einem Rohr 50, das in der Muffe 48 drehbar gelagert ist und an seinem freien Ende den Tragekopf 44 trägt. Der Tragekopf 44 wiederum umfasst einen starr mit dem Rohr 50 verbundenes Kopfteil 52, an dem ein Haltearm 54 um eine Schwenkachse 56 schwenkbar gelagert ist. An dem Haltearm 54 ist dann die Nutzlast befestigt. Wird der Tragarm 12 um die horizontale zweite Achse 30 verschwenkt, wird der Tragekopf 44 zusammen mit dem Lenker 14 um dessen Längsachse gedreht. Das bedeutet, dass der Haltearm 54 und mit ihm die Nutzlast in einer Vertikalebene verschwenkt wird, sofern der erste Lenker 14 einen Winkel von 90° mit dem Tragarm 12 bildet. Ist dieser Winkel zwischen dem ersten Lenker 14 und dem Tragarm 12 von 90° verschieden, führt der Haltearm 54 und mit ihm die Nutzlast eine Kippbewegung um zwei Raumachsen aus, wenn der Tragarm 12 um die horizontale zweite Achse 30 verschwenkt wird.

Zum Ausgleich der Drehbewegung des ersten Lenkers 14 um seine Längsachse dient ein erstes Viergelenk, mit einem ersten Schenkel 58, der in einer mit dem Lenkerrohr 50 des ersten Lenkers 14 starr verbundenen Gabel 60 um eine Achse 62 schwenkbar gelagert ist. Das andere Ende des Schenkels 58 ist über ein Universalgelenk 64 mit einem in dem unteren Holm 34 des Tragarms 14 längsverschieblich geführten Parallellenker 66 gelenkig verbunden. Dieser verbindet den ersten Schenkel 58 mit einem zweiten Schenkel 68 des Viergelenks, der über den Wellenzapfen 28 drehfest mit dem Lagerteil 22 und mit dem Parallellenker 66 um eine Gelenkachse 70 schwenkbar verbunden ist. Das Gelenkviereck umfasst also die Gelenkachsen 30, 70, das Universalgelenk 64 und die Drehachse des Lenkerrohres 50 in der Muffe 48. Wird der Tragarm 12 relativ zum Lagerteil 22 verschwenkt, so wird über dieses Viergelenk 68, 66, 58 und die Gabel 60 das Lenkerrohr 50 um seine Längsachse relativ zum Tragarm 12 verdreht, wodurch der Haltearm 54 seine Ausrichtung im Raum beibehält, sofern der erste Lenker 14 einen Winkel von 90° mit dem Tragarm 12 bildet und somit horizontal gerichtet ist.

Ist der Winkel dagegen von 90° verschieden und liegt der erste Lenker 14 beim Kippen des Tragarmes 12 somit nicht in einer horizontalen Ebene, muss eine weitere Ausgleichsbewegung über ein zweites Viergelenk erfolgen. Dieses umfasst wiederum den ersten Schenkel 58, an dem ein innerhalb des Lenkerrohres 50 verlaufender Parallellenker 72 um eine Schwenkachse 74 schwenkbar angelenkt ist, der mit seinem anderen Ende um eine Achse 76 gelenkig mit dem Haltearm 54 verbunden ist, wie dies Figur 7 zeigt. Das zweite Viergelenk umfasst somit die Gelenkachsen 62, 74, 56 und 76. Die volle Ausgleichsbewegung zum Erhalten einer vorgegebenen Position der Nutzlast im Raum bei einer beliebigen Schwenkbewegung des Tragarmes 12 und des ersten Lenkers 14 umfasst also eine Drehung des Lenkerrohres 50 mittels des ersten Viergelenkes und eine Schwenkbewegung des Haltearmes 54 durch eine Längsverschiebung des Parallellenkers 72 des zweiten Viergelenkes.

## Patentansprüche

1. Stativ zur Halterung und Positionierung einer Nutzlast im Raum mit einer Basis (10) und einem länglichen Tragarm (12), der zwischen seinen Längsenden an der Basis (10) um eine vertikale erste Achse (24) drehbar und um eine horizontale zweite Achse (30) schwenkbar gelagert ist, welche die vertikale erste Achse (24) schneidet, und der auf der einen Seite der zweiten Achse (30) die Nutzlast und auf der anderen Seite der zweiten Achse (30) ein die Nutzlast kompensierendes Gegengewicht (18) trägt, wobei die Nutzlast an einem ersten Lenker (14) angeordnet ist der an einem Ende des Tragarms (12) um eine dritte Achse (36) schwenkbar gelagert ist und das Gegengewicht (18) an einem zweiten Lenker (16) angeordnet ist, der an dem anderen Ende des Tragarms (12) um eine zur dritten Achse (36) parallele vierte Achse (38) schwenkbar gelagert ist, wobei ferner der Abstand (Ln) zwischen dem Angriffspunkt (N) der Nutzlast an dem ersten Lenker (14) und der dritten Achse (36) gleich dem Abstand zwischen dieser und der vertikalen ersten Achse (24) ist, und der in Längsrichtung des zweiten Lenkers (16) gemessene Abstand (Lg) zwischen dem Schwerpunkt (G) des Gegengewichtes (18) und der vierten Achse (38) gleich dem Abstand zwischen dieser und der vertikalen ersten Achse (24) ist, und wobei die beiden Lenker (14, 16) durch Kopplungsmittel (40, 42) so miteinander gekoppelt sind, dass sie in jeder Schwenkstellung antiparallel zueinander gerichtet sind, und die Nutzlast an einem Tragkopf (44) angeordnet ist, der um eine zur Längsrichtung des ersten Lenkers (14) parallele Schwenkachse schwenkbar ist, **dadurch gekennzeichnet, dass** der Tragkopf (44) drehfest mit einer zur Schwenkachse koaxialen Welle (50) verbunden ist, die mit einem ersten Schenkel (58) eines innerhalb des Tragarmes (12) angeordneten ersten Viergelenkes (68, 66, 58, 60) gelenkig verbunden ist, dessen zum ersten Schenkel (58) paralleler zweiter Schenkel (68) vertikal gerichtet und starr mit dem den Tragarm aufnehmenden Lagerteil (22) verbunden ist, wobei eine der durch den zweiten Schenkel (68) verlaufenden Gelenkachsen mit der horizontalen zweiten Achse (30) zusammenfällt und wobei der erste und der zweite Schenkel (58, 68) durch einen parallel zur Längsrichtung des Tragarmes (12) gerichteten ersten Parallellenker (66) miteinander verbunden sind, wobei der erste Schenkel (58) des ersten Viergelenkes mit dem ersten Parallellenker (66) über ein Universalgelenk (64) verbunden ist, dass der Tragkopf (44) ein mit dem ersten Lenker (14) verbundenes Kopfteil (52) und ein mit der Nutzlast verbundenes Halteteil (54) umfasst, das an dem Kopfteil (52) um eine zur Längsrichtung des ersten Lenkers (14) senkrechte Gelenkachse (56) schwenkbar ist und dass das Halteteil (54) mit dem ersten Schenkel (58) des ersten Viergelenkes über einen zur Längsrichtung des ersten Lenkers (14) parallelen zweiten Parallellenker (72) unter Bildung eines zweiten Viergelenkes (54, 50, 58, 72) verbunden ist, dessen Gelenkachsen parallel zur Gelenkachse (56) des Halteteils (54) sind.

2. Stativ nach Anspruch 1, **dadurch gekennzeichnet, dass** die erste, dritte und vierte Achse (24, 36, 38) in einer gemeinsamen Vertikalebene liegen.

3. Stativ nach Anspruch 1 oder 2, **dadurch gekennzeichnet, dass** die Kopplungsmittel einen parallel zur Längsrichtung des Tragarmes (12) gerichteten Parallellenker umfassen, der an seinen Enden gelenkig mit den beiden Lenkern (14, 16) unter Bildung eines Gelenkviereckes verbunden ist.

4. Stativ nach Anspruch 1 oder 2, **dadurch gekennzeichnet, dass** die Kopplungsmittel ein endloses Zugglied (42) umfassen, das über jeweils drehfest mit den beiden Lenkern (14, 16) verbundene Scheiben (40) geführt ist.

5. Stativ nach einem der Ansprüche 1 bis 4, **dadurch gekennzeichnet, dass** das Gegengewicht (18) lösbar an dem zweiten Lenker (16) angeordnet ist.

6. Stativ nach einem der Ansprüche 1 bis 5, **dadurch gekennzeichnet, dass** das Gegengewicht (18) an dem zweiten Lenker (16) in Längsrichtung desselben einstellbar ist.

7. Stativ nach einem der Ansprüche 1 bis 6, **dadurch gekennzeichnet, dass** es als Deckenstativ ausgebildet ist, wobei die Basis (10) ein an der Decke zu befestigendes Sockelteil (20) und ein den Tragarm (12) aufnehmendes und an dem Sockelteil (20) um die vertikale erste Achse (24) drehbar gelagertes Lagerteil (22) umfasst.

8. Stativ nach einem der Ansprüche 1 bis 7, **dadurch gekennzeichnet, dass** die Nutzlast eine Monitoranordnung ist.

9. Stativ nach einem der Ansprüche 1 bis 7, **dadurch gekennzeichnet, dass** die Nutzlast eine Operationsleuchte ist.

10. Stativ nach einem der Ansprüche 1 bis 9, **dadurch gekennzeichnet, dass** die Basis (10), der Tragarm (12) sowie der erste und der zweite Lenker (14, 16) zur Aufnahme und Führung von Versorgungsleitungen für die Nutzlast ausgebildet sind.

## Claims

1. A support for the holding and positioning of a utility load in space with a base (10) and an elongated supporting arm (12), which supporting arm (12) between its longitudinal ends is supported on the base (10) for a rotating movement about a vertical first axis (24) and a pivoting movement about a horizontal second axis (30), which horizontal second axis intersects the vertical first axis (24), with the supporting arm on one side of the second axis (30) carrying the utility load and on the other side of the second axis (30) carrying a counterweight (18) compensating for the utility load, the utility load being arranged on a first connector arm (14) which is supported on one end of the supporting arm (12) for pivoting movement about a third axis (36), and the counterweight (18) being arranged on a second connector arm (16) which is located at the other end of the supporting arm (12) for pivoting movement about a fourth axis (38), which is parallel to the third (36) axis, wherein the distance (Ln) between the engagement point (N) of the utility load on the first connector arm (14) and the third axis (36) is equal to the distance between the third axis and the vertical first axis (24), and the distance (Lg) between the center of gravity (G) of the counterweight (18) and the fourth axis (38) measured in the longitudinal direction of the second control arm (16) is equal to the distance between the fourth axis (38) and the vertical first axis (24), and wherein the two connector arms (14, 16) are so coupled with one another through coupling means (40, 42) that they in any pivoted position are directed antiparallel to one another, and the utility load is arranged on a carrier head (44), which carrier head is pivotable about a pivot axis parallel to the longitudinal direction of the first connector arm (14), **characterized in that** the carrier head (44) is nonrotatably connected with a shaft (50) coaxial to the pivot axis, which shaft is hingedly connected with a first leg (58) of a first four joint coupling (68, 66, 58, 60) arranged inside of the supporting arm (12), a second leg (68) of which four joint coupling being parallel to the first leg (58) and directed vertically and rigidly connected with the bearing part (22) receiving the supporting arm, with one of the joint axes extending through the second leg (68) being coincident with the horizontal second axis (30), and with the first and second legs (58, 68) being connected with one another by a first parallel arm (66) directed parallel to the longitudinal direction of the supporting arm (12), wherein the first leg (58) of the first four joint coupling is connected with the first parallel arm (66) by way of a universal joint (64), further **characterized in that** the carrier head (44) includes a head part (52) connected to the first connector arm (14) and a holding part (54) connected with the utility load, which holding part is pivotable at the head part (52) about a joint axis (56) perpendicular to the longitudinal direction of the first connector arm (14), and **in that** the holding part (54) is connected with the first leg (58) of the first four joint coupling by way of a second parallel arm (72) parallel to the longitudinal direction of the first connector arm (14) thereby forming a second four joint coupling (54, 50, 58, 72) whose joint axes are parallel to the joint axis (56) of the holding part (54).

2. A support according to claim 1, **characterized in that** the first, third and fourth axes (24, 36, 38) lie in a common vertical plane.

3. A support according to claim 1 or 2, **characterized in that** the coupling means include a parallel arm parallel to the longitudinal direction of the support arm (12), which parallel arm at its ends is hingedly connected with the two connector arms (14, 16) thereby forming a four joint coupling.

4. A support according to claim 1 or 2, **characterized in that** the coupling means include an endless tension member (42) which is guided over discs (40) which are respectively nonrotatably connected to the two support arms (14, 16).

5. A support according to one of claims 1 to 4, **characterized in that** the counterweight (18) is releasably arranged on the second support arm (16).

6. A support according to one of claims 1 to 5, **characterized in that** the counterweight (18) is adjustable on the second connector arm (16) in the longitudinal direction of the second connector arm (16).

7. A support according to one of claims 1 to 6, **characterized in that** it is made as a ceiling mounted support with the base (10) including a pedestal part (20) to be fastened to the ceiling and also including a bearing part (22) receiving the supporting arm (12) and supported on the pedestal part (20) for rotation about the vertical first axis (24).

8. A support according to one of claims 1 to 7, **characterized in that** the utility load is a monitoring arrangement.

9. A support according to one of claims 1 to 7, **characterized in that** the utility load is an operating lamp.

10. A support according to one of claims 1 to 9, **characterized in that** the base (10), the supporting arm (12) as well as the first and the second connector arms (14, 16) are formed for the receiving and guiding of supply lines for the utility load.

## Revendications

1. Support pour supporter et positionner une charge utile dans l'espace, ledit support comportant une base (10) et un bras porteur allongé (12) qui est monté sur la base (10) de façon à pouvoir tourner entre ses extrémités longitudinales autour d'un premier axe vertical (24) et à pouvoir pivoter autour d'un deuxième axe horizontal (30), lequel coupe le premier axe vertical (24), et qui supporte sur l'un des côtés du deuxième axe (30) la charge utile et sur l'autre des côtés du deuxième axe (30) un contrepoids (18) équilibrant la charge utile, la charge utile étant disposée au niveau d'un premier bras oscillant (14) qui est monté à une extrémité du bras porteur (12) de façon à pouvoir pivoter autour d'un troisième axe (36) et le contrepoids (18) étant disposé au niveau d'un deuxième bras oscillant (16) qui est monté à l'autre extrémité du bras porteur (12) de façon à pouvoir pivoter autour d'un quatrième axe (38) parallèle au troisième axe (36), la distance (Ln) entre le point d'action (N) de la charge utile au niveau du premier bras oscillant (14) et le troisième axe (36) étant en outre égale à la distance entre ce troisième axe et le premier axe vertical (24), et la distance (Lg), mesurée dans la direction longitudinale du deuxième bras oscillant (16), entre le centre de gravité (G) du contrepoids (18) et le quatrième axe (38) étant égale à la distance entre ce quatrième axe et le premier axe vertical (24), et les deux bras oscillants (14, 16) étant couplés ensemble par le biais de moyens de couplage (40, 42) de sorte qu'ils sont orientés de façon antiparallèle l'un à l'autre dans chaque position de pivotement, et la charge utile étant disposée au niveau d'une tête porteuse (44) qui est apte à pivoter autour d'un axe de pivotement parallèle à la direction longitudinale du premier bras oscillant (14), **caractérisé en ce que** la tête porteuse (44) est reliée sans pouvoir tourner à un arbre (50) qui est coaxial à l'axe de pivotement et qui est relié de façon articulée à une première branche (58) d'un premier quadrilatère articulé (68, 66, 58, 60) qui est disposé à l'intérieur du bras porteur (12) et dont la deuxième branche (68), parallèle à la première branche (58), est orientée verticalement et reliée rigidement à la pièce formant palier (22) qui reçoit le bras porteur, l'un des axes d'articulation qui passent par la deuxième branche (68) coïncidant avec le deuxième axe horizontal (30) et les première et deuxième branches (58, 68) étant reliées l'une à l'autre par un premier bras oscillant parallèle (66) orienté parallèlement à la direction longitudinale du bras porteur (12), la première branche (58) du premier quadrilatère articulé étant reliée au premier bras parallèle (66) par le biais d'une articulation de Cardan (64), **en ce que** la tête porteuse (44) comporte une pièce de tête (52) reliée au premier bras oscillant (14), et une pièce de retenue (54) qui est reliée à la charge utile (54) et qui est apte à pivoter au niveau de la pièce de tête (52) autour de l'axe d'articulation (56) perpendiculaire à la direction longitudinale du premier bras oscillant (14) et **en ce que** la pièce de retenue (54) est reliée à la première branche (58) du premier quadrilatère articulé par le biais d'un deuxième bras oscillant parallèle (72) parallèle à la direction longitudinale du premier bras oscillant (14) en formant un deuxième quadrilatère articulé (54, 50, 58, 72) dont les axes d'articulation sont parallèles à l'axe d'articulation (56) de la pièce de retenue (54).

2. Support selon la revendication 1, **caractérisé en ce que** les premier, troisième et quatrième axes (24, 36, 38) sont situés dans un plan vertical commun.

3. Support selon la revendication 1 ou 2, **caractérisé en ce que** les moyens de couplage comportent un bras oscillant parallèle qui est orienté parallèlement à la direction longitudinale du bras porteur (12) et qui est relié de façon articulée au niveau de ses extrémités aux deux bras oscillants (14, 16) en formant un quadrilatère articulé.

4. Support selon la revendication 1 ou 2, **caractérisé en ce que** les moyens de couplage comportent un élément de traction sans fin (42) qui est guidé par des disques (40) reliés respectivement, immobiles en rotation, aux deux bras oscillants (14, 16).

5. Support selon l'une des revendications 1 à 4, **caractérisé en ce que** le contrepoids (18) est disposé de façon amovible au niveau du deuxième bras oscillant (16).

6. Support selon l'une des revendications 1 à 5, **caractérisé en que** le contrepoids (18) est réglable au niveau du deuxième bras oscillant (16) dans une direction longitudinale de celui-ci.

7. Support selon l'une des revendications 1 à 6, **caractérisé en ce qu'**il est conformé en support de plafond, la base (10) comportant une pièce d'embase (20) destinée à être fixée au plafond, et une pièce formant palier (22) recevant le bras porteur (12) et montée sur la pièce d'embase (20) de façon à pouvoir tourner autour du premier axe vertical (24).

8. Support selon l'une des revendications 1 à 7, **caractérisé en ce que** la charge utile est un dispositif de type écran de contrôle.

9. Support selon l'une des revendications 1 à 7, **caractérisé en ce que** la charge utile est un scialytique.

10. Support l'une des revendications 1 à 9, **caractérisé en ce que** la base (10), le bras porteur (12) ainsi que les premier et deuxième bras oscillants (14, 16) sont conformés pour recevoir et acheminer des lignes d'alimentation jusqu'à la charge utile.
